# EUROPÄISCHE PATENTSCHRIFT

(11) **EP 1 964 792 B1**
(45) Veröffentlichungstag und Bekanntmachung des Hinweises auf die Patenterteilung: **25.04.2012**
(21) Anmeldenummer: 08101678.4
(22) Anmeldetag: 15.02.2008
(51) Int. Cl.: B65G 1/04, B65G 1/137

(54) **Verfahren zum Bereitstellen von Transporteinheiten aus einem Lager in einer gewünschten vorgegebenen Reihenfolge auf mindestens einer Sammelstrecke**
Method for supplying transport units from a depot in a desired order onto at least one collecting track
Procédé destiné à la préparation d'unités de transport à partir d'un stockage selon une suite prédéterminée souhaitée sur au moins une trajectoire de collecte

(30) Priorität: 02.03.2007 DE 102007010191
(43) Veröffentlichungstag der Anmeldung: 03.09.2008
(73) Patentinhaber: Dematic Accounting Services GmbH, 63073 Offenbach (DE)
(72) Erfinder: Meurer, Hans Christoph, 64380 Roßdorf (DE); Jungbluth, Volker, 64850 Schaafheim (DE)
(74) Vertreter: Moser & Götze

(56) Entgegenhaltungen:
- EP-A- 0 457 158
- DE-A1- 10 136 354
- DE-U1- 29 724 039
- JP-A- 3 272 907
- JP-A- 2000 118 639

## Beschreibung

Die Erfindung betrifft ein Verfahren zum Bereitstellen von Transporteinheiten aus einem Lager in einer gewünschten vorgegebenen Reihenfolge auf mindestens einer Sammelstrecke.

Beim Kommissionieren oder Zusammenstellen von Aufträgen aus fertig kommissionierten Transporteinheiten, wie z.B. Artikel oder Behälter, ist es notwendig, die Transporteinheiten, die zu einem gemeinsamen Auftrag gehören, sortiert zur Verfügung zu stellen. Dazu ist es üblich, die Transporteinheiten eines Auftrags zwischenzuspeichern (puffern), bis alle für den Auftrag notwendigen Transporteinheiten vorliegen. Diese werden dann gemeinsam auf eine Sammelstrecke aufgegeben, die sie z. B. zur Palettierung, Kommissionierstation, Warenausgabe, Versand etc. führt.

Aus der EP 0 860 382 B1 ist ein Verfahren bzw. ein System zum Kommissionieren bekannt, bei dem die Behälter in einem Sortierpuffer zwischengelagert und hinsichtlich Ihrer für den jeweiligen Kommissionierplatz vorgesehenen Reihenfolge sortiert aus dem Sortierpuffer ausgegeben werden. In dem Sortierpuffer werden die Behälter auf mehreren vertikal übereinander angeordneten ortsfesten Stellplätzen mittels eines Vertikalbediengeräts zwischengelagert, das anschließend die Sortierung durch den entsprechenden Zugriff/Auslagerung vornimmt.

Die DE 299 12 230 U1 offenbart eine Kommissionieranlage für Behälter mit einer zwischen Kommissionierbereich und Warenausgangsbereich angeordneten Einrichtung zum Zwischenpuffern und Sortieren von fertigkommissionierten Behältern vor dem Warenausgang. Die modular aufgebaute Einrichtung umfasst Module, die jeweils ein Behälterregal (Lager), eine Einlagerbahn zum Zuführen der von dem Kommissionierbereich kommenden Behälter in das Behälterregal, eine Auslagerbahn zum Abtransport der Behälter vom Behälterregal in Richtung Warenausgang und ein Bediengerät zum Einlagern der von der Einlagerbahn zugeführten Behälter in das Behälterregal und zum Auslagern der im Behälterregal befindlichen Behälter auf die Auslagerbahn umfassen. Die zu einem Kommissionierauftrag gehörenden Behälter werden dabei möglichst in einem Modul gelagert, bis alle Behälter des Auftrags vorliegen. Zum Abrufen aller Behälter eines Auftrags werden diese auf die Auslagerbahnen ausgelagert und gestaut. Anschließend werden die Behälter durch einen einzigen Übersetzer nacheinander von den jeweiligen Auslagerbahnen auf eine Förderbahn (Sammelstrecke) abgezogen, so dass alle Behälter eines Auftrags hintereinander aufgereiht sind. Dabei wird die eigentliche Sortierung, also die Reihenfolge der Behälter durch den Übersetzer bzw. dessen Steuerung vorgenommen.

Mit diesen Verfahren bzw. Anlagen ist zwar eine sortierte Ausgabe der Behälter am jeweiligen Kommissionierplatz möglich, doch ist die erzielbare Leistung nicht ausreichend und das System aufwendig und beansprucht relativ viel Stellplatz. Zudem ist eine gute Sortierleistung nur möglich, wenn alle zu einem Auftrag gehörenden Behälter in einem Modul oder mindestens in benachbarten Modulen eingelagert sind. Eine freie und somit gute Ausnutzung des gesamten Lagers ist nicht möglich. Auch ist die Anzahl der Lagerplätze gering und zwingt zur leistungsmindernden doppelttiefen Lagerung. Zusätzlich sind die Hubbalken parallel zur Sammelstrecke angeordnet, d.h. alle auf einer Linie. Dies ist für eine hohe Leistung bei Bedienung mehrerer Auslagerbahnen erforderlich, bedingt jedoch, dass eine Skalierung der Lagergröße (Anzahl der Stellplätze) nur in der Höhe durch Hinzufügen weiterer Ebenen oder eine Verlängerung des Gesamtsystems möglich ist. Dies bringt jedoch eine ungünstige Form des Systems mit sich, nämlich lang und schmal.

Aus der DE 101 36 354 A1 ist ein Verfahren nach dem Oberbegriff von Anspruch 1 zum Kommissionieren in einer Kommissionieranlage mit einem Behälterregal und zugeordnetem Regalbediengerät zur Aus- und Einlagerung der Behälter aus bzw. in das Behälterregal zu bzw. von mindestens zwei Kommissionierarbeitsplätzen und mit einem Verteilsystem zum Verteilen der Behälter auf die einzelnen Arbeitsplätze bekannt. Ein ausgewählter Behälter des Behälterregals über das Regalbediengerät einer ausgewählten noch einmal separat für jeden Arbeitsplatz vorgesehenen Förderbahn zugeführt und einem bestimmten Arbeitsplatz zugeleitet, und nach einer Behandlung des Behälters einen Arbeitsplatz der Behälter über die ausgewählte Förderbahn zu dem Behälterregal wieder zurück geführt.

Aus der DE 297 24 039 U1 ist eine Kommissionieranlage mit einem Behälterlager mit Fördereinrichtung zum Transport der Behälter aus dem Behälterlager zu einer Mehrzahl von Kommissionierarbeitsplätzen und mit einem zwischen dem Behätterlager und den Arbeitsplätzen vorgesehenen Verteil system zum Verteilen der Behälter auf die einzelnen Arbeitsplätze bekannt. Zur Durchführung des Verfahrens nach einem der vorgehenden Ansprüche ist in den zwischen dem Verteilsystem und den Arbeitsplätzen vorhandenen Transportwegen jeweils ein Sortierpuffer angeordnet.

Aus der EP 0 457 158 A1 ist ein Verfahren zur Kommissionieren von in Gewinden zugeführten Artikeln bekannt, bei dem automatischen Rechner gesteuert die zugeführten Gewinde zwischen gespeichert werden, die Artikel aus den Gewinden nach Bedarf vereinzelt werden, die aus den Gewinden vereinzelten Artikel auf einen oder mehrere Regalabschnitte eines Durchlaufspeichers verteilt werden und die einzelnen Artikel einer zusammen zu stellenden Kommission aus dem Durchlaufspeicher nach Vorgabe abgerufen werden.

Aus der JP 2000-118639 A ist ein Warenlager bekannt, mit parallelen Ein- und Ausgangsförderem, die sich in eine Lieferzone so erstrecken, dass Lastwagen be-und entladen werden können. Ein Zwischenlager umfasst Regale, die sich von einer Wand des Lagers zu der anderen Seite erstreckten, wo Lifte angeordnet sind, die wiederum mit den Förderern verbunden sind. Die Beschickung der Lifte wird über Sensoren derart gesteuert, dass in einem Regal der Regale gleichartige Waren gelagert werden.

Aus der JP 03-272907 A ist ein Umlaufregal bekannt, das eingangsseitig zufällig bestückt wird und ausgangsseitig derart gesteuert ist, dass das gewünschte Produkt entnommen werden kann, nachdem das Umlaufregal entsprechend bewegt worden ist. Dieses Umlaufregal ist zusätzlich eingangsseitig mit einem ersten Speicher der FIFO-Art versehen, welches eine geringe Anzahl großer Produkte aufnehmen kann, und mit einem zweiten Speicher versehen, der zufällig Artikel speichert und diese mit dem Umlaufregal austauschen kann. Die Produkte werden dann entweder aus dem ersten Speicher oder dem zweiten Speicher in Arbeitsplätzen bereit gestellt, wobei die Steuerung derart ist, dass je nach Arbeitsplatzangabe das Produkt entweder aus dem ersten oder dem zweiten Speicher bzw. dem Umlaufregal entnommen wird.

Aufgabe der Erfindung ist es, ein Verfahren bzw. ein System zum Bereitstellen von Transporteinheiten aus einem Lager bereitzustellen, bei dem die Transporteinheiten in einer gewünschten vorgegebenen Reihenfolge ausgegeben werden, das eine hohe Leistung ermöglicht bei möglichst einfachem Aufbau und wenig Stellplatzverbrauch.

Diese Aufgabe wird durch das in Anspruch 1 angegebene Verfahren gelöst.

Dadurch, dass nach dem erfindungsgemäßen Verfahren als Regalbediengerät ein Einebenenregalbediengerät verwendet wird, das pro Lagerregalebene und Lagerregalgasse vorgesehen ist, pro Lagerregalgasse ein dem Einebenenregalbediengerät nachgeschalteter Auslagerlift verwendet wird, um die Transporteinheiten dem jeweils pro Lagerregalgasse nachgeschalteten Auslagerpuffer zu übergeben, die Auslagerpuffer direkt mit der mindestens einen Sammelstrecke verbunden sind und zusätzlich die Einebenenregalbediengeräte, Auslagerlifte und die Auslagerbahnen bzw. Auslagerpuffer derart abgestimmt gesteuert und betrieben werden, dass die Transporteinheiten von dem Auslagerpuffer auf die mindestens eine Sammelstrecke in der gewünschten vorgegebenen Reihenfolge gelangen, wobei die Einebenenregalbediengeräte derart gesteuert und betrieben werden, dass bei der Auslagerung über die Einebenenregalbediengeräte eine Sortierung der Transporteinheiten pro Lagerregalgassenebene stattfindet, ist es möglich, eine besonders hohe Auslagerleistung bei vollständiger Einhaltung der gewünschten Reihenfolge der Transporteinheiten zu erreichen. Dies wird zudem noch mit deutlich weniger technischem Aufwand als nach dem Stand der Technik erreicht.

Es versteht sich, dass soweit der Begriff Transporteinheiten gebraucht wird, dies nicht beschränkend aufzufassen ist, sondern auch andere Transportarten (z.B. Tabletts, Paletten etc) mit gleichem Erfolg im Rahmen der Erfindung verwendet werden können. Auch soll der Begriff Transporteinheiten insbesondere Behälter und Artikel umfassen.

Die Transporteinheiten können ohne Kenntnis der späteren Reihenfolge beliebig ("chaotisch") über das gesamte System verteilt eingelagert werden. Es ist dabei im Gegensatz zur DE 299 12 230 U1 keine Beschränkung auf etwaige Module oder Lagerbereiche notwendig.

Erfindungsgemäß werden ebenfalls, wenn die Auslagerlifte derart gesteuert und betrieben, dass über die Auslagerlifte eine Sortierung der Transporteinheiten bezüglich der Lagerregalgassen stattfindet.

Erfindungsgemäß werden ebenfalls die Auslagerpuffer zur Übergabe der Transporteinheiten an die mindestens eine Sammelstrecke derart gesteuert und betrieben werden, dass über die Auslagerpuffer ein Sortierung bezüglich der Lagerregalgassen stattfindet.

Somit kann jedes Einebenenregalbediengerät über eine spezifische FIFO-Tabelle gesteuert werden. Auch jeder Auslagerlift kann über eine spezifische FIFO-Tabelle gesteuert werden.

Daher ist die Steuerung der einzelnen Einheiten an sich über die Einspeisung der FIFO-Tabellen einfach bzw. kann mit gewissem Vorlauf erfolgen. Die Einheiten können dann "stumpf' ihre jeweils eigene FIFO-Tabelle bzw. Auftrag abarbeiten.

Somit können die Einebenenregalbediengeräte und Auslagerlifte derart aufeinander abgestimmt gesteuert und betrieben werden, dass eine gewünschte Belegung der Auslagerpuffer erfolgt.

Die gewünschte endgültige Reihenfolge der Transporteinheiten auf der Sammelstrecke wird dann nach dieser Vorsortierung dadurch erreicht, dass die Auslagerpuffer einer Sammelstrecke derart aufeinander abgestimmt gesteuert und betrieben werden, dass die Abgabe der Transporteinheiten die gewünschte vorgegebene Reihenfolge auf der Sammelstrecke ergibt.

Hierzu ist es erfindungsgemäß vorgesehen, dass die Auslagerpuffer über eine "Fenstertechnik" gesteuert werden. Somit können die Transporteinheiten unabhängig von ihrem Ort (Auslagerpuffer) in der gewünschten Reihenfolge auf der Sammelstrecke zusammengestellt werden. Dies erfolgt Idealerweise zudem lückenlos, so dass die Sammelstrecke vollständig genutzt wird.

Sobald die in der Reihenfolge einer Transporteinheit vorangehenden Transporteinheiten in den Auslagerpuffern vollständig sind, wird auf der Sammelstrecke für die Transporteinheit ein ihrer Stelle in der Reihenfolge entsprechender Platz reserviert, auf den sie dann, sobald dieser Platz an dem jeweiligen Auslagerpuffer angelangt und vorbeibewegt, übergeben wird.

Weiterhin ist es von Vorteil, wenn jede Lagerregalebene mindestens einen Pufferplatz zwischen Einebenenregalbediengerät und Auslagerlift aufweist, so dass der Auslagerlift durch den vollen Puffer aufgrund der höheren Schnelligkeit der Einebenenregalbediengeräte nie leer fährt. Insbesondere weist jeder Auslagerlift ein oder mehrere Puffer-Plätze auf. In entsprechender Weise ist auch der Einlagerlift ausgestaltbar.

Zur Erhöhung der Leistung und der Anzahl der parallel bearbeitbaren Aufträge ist es sinnvoll, wenn jeder Auslagerlift die beförderten Transporteinheiten an mehrere Auslagerpuffer abgeben kann. Besonders bevorzugt ist es, wenn jede Lagerregalgasse über genauso viele Auslagerpuffer verfügt, wie Sammelstrecken existieren und dabei jede Lagerregalgasse an jede Sammelstrecke angeschlossen ist. Dann können mit dem beschriebenen Verfahren gleichzeitig so viele unabhängige Aufträge bearbeitet werden, wie Sammelstrecken vorhanden sind.

Wenn das Regalbediengerät ein Einebenenregalbediengerät ist, das pro Lagerregalebene und Lagerregalgasse vorgesehen ist, ein pro Lagerregalreihe dem Einebenenregalbediengerät nachgeschalteter Auslagerlift vorgesehen ist, um die Transporteinheiten der jeweils pro Lagerregalgasse nachgeschalteten Auslagerbahn zu übergeben, und die Auslagerbahnen direkt mit der mindestens einen Sammelstrecke verbunden sind, ist es möglich, insbesondere nach dem obigen Verfahren, die Transporteinheiten in einer gewünschten Reihenfolge af der Sammelstrecke mit hoher Leistung und einfachem technischem Aufwand bereitzustellen. Dabei kann in Idealfall der auf der Sammelstrecke zur Verfügung stehende Raum vollständig d.h. lückenlos genutzt werden.

An die Einlagerbahnen werden keine besonderen Anforderungen gestellt. Sie sind bevorzugt mit einer gesonderten Einlagertechnik zur Einlagerung der Transporteinheiten an das Lager angebunden. Hierbei kann es sich um dedizierte Einlagerlifte und Zuführstrecken handeln.

Als Einebeneregalbediengerät kommen insbesondere sogenannte MultiShuttle zum Einsatz. Diese sind z. B. in der EP 1 254 852 A1 beschrieben. Der MultiShuttle ist ein universell einsetzbares und modular aufgebautes System, das Lagerung und Transport in einem durchgängigen Konzept vereint. Den Bereich der Automatischen Kleinteilelager (AKL) ergänzt der MultiShuttle als eine leistungsstarke, preisgünstige und innovative Lösung. Es handelt sich um ein schienengebundenes Fahrzeug, das im Regal und das gesamte Lagersystem bedient. Das Systemkonzept basiert auf autonomen, schienengeführten Fahrzeugen zum Behältertransport, die innerhalb und außerhalb des Lagersystems verkehren. Ein spezielles Lastaufnahmemittel ermöglicht kurze Lastwechselzeiten sowie simultane Be- und Entladungen. Das System verfügt über Fahrschienen, die in jeder Ebene des Lagers beziehungsweise aufgeständert oder abgehangen in der Vorzone installiert sind. Sie übernehmen neben der Führung auch die Spannungsversorgung der Fahrzeuge. Der Verzicht auf Akkumulatoren an Bord der Fahrzeuge erlaubt eine gewichtsoptimierte Gestaltung des MultiShuttle-Fahrzeugs. Über hochdynamische Lifte wechseln die Fahrzeuge die Ebenen. Die Transportaufträge erhalten die Fahrzeuge über W-LAN (Wireless Local Area Network).

Neben einer erhöhten Geschwindigkeit, mit der Behälter ein- und ausgelagert werden können, ist das System sehr kostengünstig und stark belastbar. Der MultiShuttle dient in Kleinteilelagern als leistungsstarke und innovative Lösung und ergänzt die Automatischen Kleinteilelager (AKL).

Gerade für Auftragssammelspeicher, dass heißt bei niedriger Lagerkapazität und hohem Umschlag, sind die MultiShuttle-Lösungen im mittleren Leistungsspektrum günstiger. Weitere auf das System abgestellte Komponenten ermöglichen den Transport der Ladeeinheiten in der Vorzone. Hierin besteht die Universalität des MuttiShuttle, da die Last gleichsam von der Quelle bis zur Senke ohne weitere Transportübergänge befördert wird.

Als Auslagerlift kommen insbesondere Vertikalförderer in Betracht. Günstig ist es, wenn jeder Auslagerlift ein oder mehrere, insbesondere zwei Plätze aufweist.

Weiterhin ist es sinnvoll, wenn jede Lagerregalebene mindestens einen Pufferplatz zur Entkopplung von Einebenenregalbediengerät und Auslagerlift aufweist. Dies ermöglicht es, die schnelleren Einebenenregalbediengerät voll auszulasten und ein leerlaufen des Lifts zu verhindern.

Bevorzugterweise ist jeder Auslagerlift mit mehreren Auslagerbahnen verbunden. Dies verbessert die Möglichkeiten der Sortierung und erhöht die Anzahl der parallel bearbeitbaren Aufträge bzw. die Zahl der versorgbaren Stationen.

Dabei ist es besonders bevorzugt, wenn mindestens so viele Auslagerbahnen wie Lagerregalgassen zu einer Gruppe zusammengefasst sind, die auf eine gemeinsame Sammelstrecke münden. Dann kann die Verarbeitungsleistung des Systems besonders bezüglich der Möglichkeiten der Sortierung optimiert und bezüglich der Anzahl der parallel bearbeitbaren Aufträge erhöht, wenn mehrere Sammelstrecken vorgesehen sind.

Im einfachsten Fall sind die Auslagerbahnen als Staubahnen, insbesondere Förderer ausgeführt. Diese können z. B. mit einer Staumechanik, insbesondere einem verfahrbaren Stoppelement, versehen sein.

In einer besonders bevorzugten Ausführungsform sind die Lagerregalgassen und die Auslagerbahnen parallel und nebeneinander sowie quer zu der mindestens einen Sammelstrecke angeordnet, wobei die Auslagerbahnen unterhalb der Lagerregalgassen angeordnet sind. Somit kann das System zur Erweiterung der Kapazität in der Höhe und der Breite sowie in der Länge verändert werden. Dies ermöglicht ein kompakteres und somit leistungsfähigeres System, da die Wege verkürzt werden.

Weiterhin ist es von Vorteil, wenn jeder Auslagerlift pro Platz einen separat angetriebenen Förderer aufweist. Insbesondere ist es dann sinnvoll, wenn jeder Auslagerlift zwei Plätze aufweist, die jeweils mit einem separat angetriebenen Förderer versehen sind, die in unterschiedliche Richtungen verfahrbar sind. Somit kann die Übergabe von zwei Transporteinheiten pro Ebene (z.B. bei zuvor stehender Anordnung) immer gleichzeitig in unterschiedliche Richtungen bzw. auf unterschiedliche Auslagerpuffer, z. B. nach Links und Rechts erfolgen. Dazu wird die Aufnahme der Transporteinheiten auf den Lift vorzugsweise so gesteuert, dass die beiden Transporteinheiten auf eine Ebene abgegeben werden sollen. Aufgrund der hohen Leistungsfähigkeit der eingesetzten MultiShuttle ist dies möglich, da die Übergabeplätze (Pufferplatz) zum Auslagerlift praktisch immer belegt sind, so dass für die Steuerung des Auslagerlifts eine Auswahlmöglichkeit gegeben ist, die die entsprechende Belegung des Lifts mit Transporteinheiten für unterschiedliche Auslagerpuffer einer Ebene erlaubt.

Das System zeichnet sich ferner durch eine hohe Flexibilität aus, da die Ein- und Auslagerbahnen an beliebigen Stellen an die entsprechenden Lifte angeschlossen werden können. Besonders bevorzugt ist die Anordnung unterhalb oder oberhalb des Regals, jedoch ist auch eine Anordnung der Bahnen auf Höhe einer Regalebene möglich.

Parallel zu den Auslagerliften können ebenfalls dedizierte Einlagerlifte mit entsprechend zuführenden Verteilbahnen vorgesehen sein. Andererseits ist es auch möglich, die Auslagerlifte so zu steuern, dass sie neben der Auslagertätigkeit auch als Einlagerlifte dienen können. In umgekehrter Weise können bei Bedarf auch ggf. vorhandene dedizierte Einlagerlifte als Auslagerlifte verwendet werden. Dies ermöglicht auch bei Störungen einzelner Lifte einen unterbrechungsfreien Betrieb bzw. eine Erhöhung der Leistung des Systems. Dazu müssen die Ein- bzw. Auslagerstrecken zwischen Lift und Regal in der Höhe unterschiedlich angeordnet sein. Dies bedingt das Vorhandensein zweier gleichartiger kombinierter Ein- und Auslagerebenen, deren Sammelstrecken nach passieren der letzten Auslagerstrecke in Sequenz zusammengeführt werden.

Weitere Einzelheiten und Vorteile ergeben sich aus der nachfolgenden Beschreibung eines Ausführungsbeispieles anhand der Zeichnung, in der
Fig. 1 eine schematische Draufsicht auf ein erfindungsgemäßes System zeigt;
Fig. 2 eine schematische Seitenansicht auf das System aus Fig. 1 im Schnitt durch die erste Lagerregalgasse mit Blick auf den Auslagerlift zeigt und
Fig. 3 eine Figur 2 entsprechende Ansicht mit Blick auf den Einlagerlift zeigt.

In den Figuren ist ein als Ganzes mit 100 bezeichnetes System zum Bereitstellen von Transporteinheiten T aus einem Lager 1 in einer gewünschten vorgegebenen Reihenfolge auf mindestens einer Sammelstrecke S dargestellt.

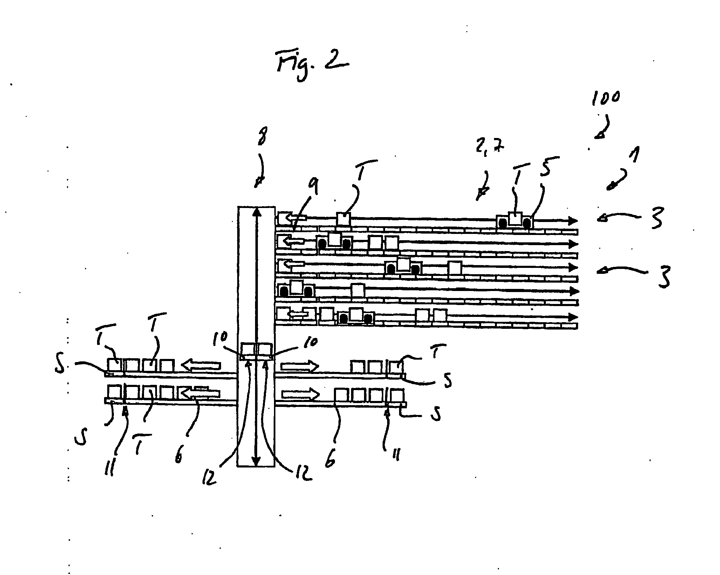

Es umfasst mehrere Lagerregalgassen 2 und Lagerregalebenen 3 (vgl. Fig. 2), in denen die Transporteinheiten T auf Stellplätzen gelagert werden. Pro Lagerregalgasse 2 sind mindestens eine Einlagerbahn 4 sowie ein Regalbediengerät 5 vorgesehen, um die Transporteinheiten T in bzw. aus dem Regal ein- und auszulagem. Ferner ist pro Lagerregalgasse 2 mindestens eine Auslagerbahn 6 vorgesehen.

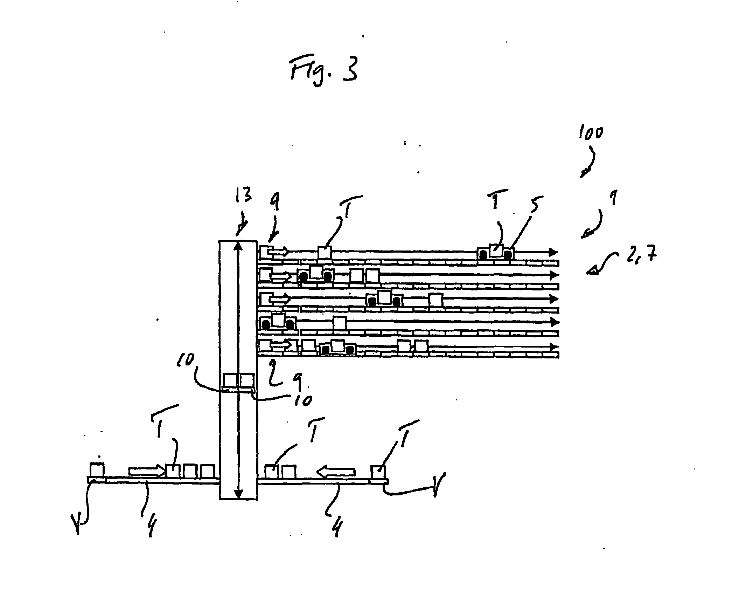

Im vorliegenden Beispiel sind pro Lagerregalgasse 2 jeweils zwei Einlagerbahnen 4 und vier Auslagerbahnen 6 vorgesehen. Diese sind in unterschiedlichen Ebenen unterhalb des Lager 1 angeordnet (vgl. Fig. 2 und 3). Entsprechend sind auch vier Sammelstrecken S vorgesehen. Die Auslagerbahnen 6 sind direkt mit den Sammelstrecken S verbunden. Dies gilt entsprechend für die Einlagerbahnen 4, die vorliegend auch von den Sammelstrecken S versorgt werden.

Im System 100 ist das Regalbediengerät ein Einebenenregalbediengerät 5, das pro Lagerregalebene 3 und Lagerregalgasse 2 nur einmal vorgesehen ist. Dabei handelt es sich um ein sogenanntes MultiShuttle (s .o.), also ein schienengebundenes Satellitenfahrzeug, das per Funk ferngesteuert wird und für die Ein- und Auslagerung der Transporteinheiten T auf bzw. aus den Stellplätzen und Übergabe bzw. Übernahme vom Pufferplatz (s. u.) zuständig ist.

Weiter ist pro Lagerregalreihe 7 ein dem Einebenenregalbediengerät 5 nachgeschalteter Auslagerlift 8 an der einen Stirnseite vorgesehen, um die Transporteinheiten T den jeweils pro Lagerregalgasse 2 nachgeschalteten Auslagerbahnen 6 zu übergeben. Jeder Auslagerlift 8 weist zwei Plätze 10 auf.

Dabei weist jeder Auslagerlift 8 pro Platz 10 einen separat angetriebenen Förderer 12 auf, der in unterschiedliche Richtungen verfahrbar ist. Somit können Transporteinheiten T von beiden Plätzen 10 gleichzeitig abgegeben werden und zwar insbesondere in unterschiedliche Richtungen, also auf unterschiedliche Auslagerbahnen 6 und somit Sammelstrecken S.

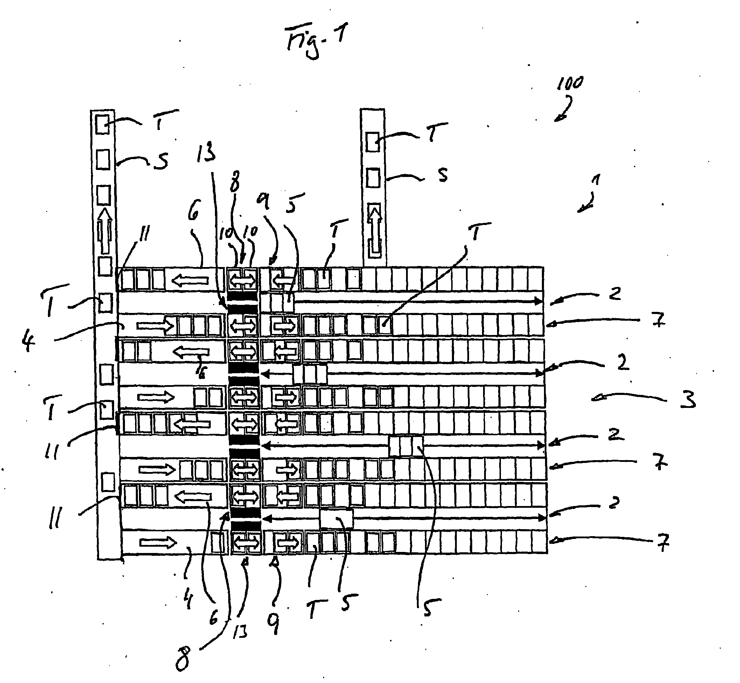

Jede Lagerregalebene 3 weist jeweils zwei Pufferplätze 9 zwischen dem Einebenenregalbediengerät 5 und Auslagerlift 8 pro Regalreihe 7 auf, über die der Lift 8 bzw. das Einebenenregalbediengerät 5 ver- bzw. entsorgt werden. Das Einebenenregalbediengerät 5 entnimmt also z.B. einer Regalreihe 7 eine Transporteinheit T und setzt diese auf einen Pufferplatz 9 ab. Dort übernimmt der Auslagerlift 8 die Transporteinheit T zum weiteren Transport. Vorliegend dienen zwei Pufferplätze 9 pro Ebene 3 als Einlagerpuffer und zwei Pufferplätze 9 als Auslagerpuffer (vgl. Pfeile in Fig. 1).

Jeder Auslagerlift 8 ist dabei mehreren Auslagerbahnen 6 verbunden. Im vorliegenden Beispiel sind pro Auslagerlift 8 jeweils vier Auslagerbahnen 6 vorgesehen (vgl. Fig. 2), nämlich jeweils zwei pro Ebene bei zwei Ebenen. Die Auslagerbahnen 6 sind als staubare Rollenbahnen ausgeführt, die mit einer einem verfahrbaren Stoppelement 11 versehen sind, so dass die Abgabe der Transporteinheiten T auf die Sammelstrecke S gesteuert werden kann. Entsprechend kann auch eine Aufnahme von Transporteinheiten T von der Sammelstrecke S gesteuert werden, wenn die Auslagerbahnen 6 und Auslagerlifte 8 zur Einlagerung Verwendung finden.

Wie in Fig. 3 gezeigt ist, sind spezifische Einlagerbahnen 4 vorgesehen, die in Fig. 2 aus Übersichtlichkeitsgründen nicht dargestellt sind und die über eine Verteilstrecke V mit einzulagernden Transporteinheiten T versorgt werden. Im in Fig. 3 gezeigten Fall werden die Einlagerbahnen 4 von nach oben fahrenden dedizierten Einlagerlagerliften 13 entsorgt bzw. die Transporteinheiten T zur Einlagerung auf die entsprechenden Lagerregalebenen 3 befördert. Wo die Transporteinheiten T über die entsprechenden Pufferplätze 9 an die Einebenenregalbediengeräte 5 übergeben werden, die die Einlagerung vornehmen. Die Einlagerlifte 13 entsprechen technisch den Auslagerliften 8.

Ebenfalls aus Übersichtlichkeitsgründen sind die Sammelstrecken S und die Auslagerbahnen 6 in Fig. 3 nicht dargestellt.

Alternativ wäre es möglich, dass die Einlagerbahnen 4 über die Auslagerlifte 8 bedient werden. Im in Fig. 3 gezeigten Fall könnten so die Einlagerbahnen 4 vom theoretisch leeren, weil die Transporteinheiten T abgegeben worden sind, nach oben fahrenden Auslagerlift 8 entsorgt bzw. die Transporteinheiten T zur Einlagerung auf die entsprechenden Lagerregalebenen 3 befördert werden. Es wären also kombinierte Ein- und Auslagerlifte denkbar.

Zusammenfassend sind also die Lagerregalgassen 2 und die Auslagerbahnen 6 jeweils parallel und nebeneinander sowie quer zu der mindestens einen Sammelstrecke S angeordnet, wobei die Auslagerbahnen 6 vorliegend unterhalb der Lagerregalgassen 2 angeordnet sind.

Zum Bereitstellen von Transporteinheiten T aus dem Lager 1 in einer gewünschten vorgegebenen Reihenfolge auf mindestens einer der Sammelstrecken S wird wie folgt verfahren.

Zunächst werden die Transporteinheiten T beliebig im Lager 1 bzw. Regal auf die Stellplätze in den Lagerregalebenen 3 und -gassen 2 abgelegt. Dazu werden die Transporteinheiten T über die Verteilstrecke V und die Einlagerbahnen 4 und den Einlagerliften 13, den Pufferplätzen 9 und den Einebenenregalbediengeräten 5 eingelagert.

Steht ein Auftrag fest, werden aufgrund der benötigten Reihenfolge der Transporteinheiten T für den Auftrag und der bekannten Verteilung der Transporteinheiten T im Lager 1 durch die zentrale Steuerung die Einebenenregalbediengeräte 5 derart gesteuert und betrieben, dass über die Einebenenregalbediengeräte 5 eine Sortierung der Transporteinheiten T pro Lagerregalgassenebene 2,3 stattfindet. Parallel werden die Auslagerlifte 8 derart gesteuert und betrieben werden, dass über die Auslagerlifte 8 eine Sortierung der Transporteinheiten T bezüglich der Lagerregalgassen 2 stattfindet.

Hierzu wird für jedes Einebenenregalbediengerät 5 eine spezifische FIFO-Tabelle erzeugt und zu dessen Steuerung eingesetzt. Entsprechend wird jeder Auslagerlift 8 ebenfalls über eine spezifische FIFO-Tabelle gesteuert. Somit können diese einfach einen Vorgang nach einander abarbeiten, ohne dass ein Eingriff notwendig ist.

Dabei werden die Einebenenregalbediengeräte 5 und Auslagerlifte 8 derart aufeinander abgestimmt gesteuert und betrieben, dass die gewünschte Belegung der Auslagerpuffer bzw. Auslagerbahnen 6 erfolgt.

Die gewünschte endgültige Reihenfolge der Transporteinheiten T auf der jeweiligen Sammelstrecke S für einen Auftrag wird dann nach dieser Vorsortierung dadurch erreicht, dass die Auslagerpuffer 6 einer Sammelstrecke derart aufeinander abgestimmt gesteuert und betrieben werden, dass die Abgabe der Transporteinheiten T die gewünschte vorgegebene Reihenfolge auf der Sammelstrecke S ergibt.

Hierzu werden die Auslagerpuffer 6 über eine "Fenstertechnik" gesteuert. Somit können die Transporteinheiten unabhängig von ihrem Ort (Auslagerpuffer bzw. -bahn 6) in der gewünschten Reihenfolge auf der Sammelstrecke S zusammengestellt werden. Dies erfolgt zudem lückenlos, so dass die Sammelstrecke S vollständig genutzt wird.

Dazu wird, sobald die in der Reihenfolge einer Transporteinheit T vorangehenden Transporteinheiten in den Auslagerpuffern 6 vollständig sind, auf der Sammelstrecke S für die Transporteinheit T ein ihrer Stelle in der Reihenfolge entsprechender Platz (Fenster) reserviert, auf den sie dann, sobald dieser Platz an dem jeweiligen Auslagerbahn 6 angelangt und vorbeibewegt, übergeben wird. Hierzu wird dann das jeweilige Stoppelement 11 zur Freigabe der Rollenbahn und Übergabe der Transporteinheit T "geöffnet".

### Bezugszeichenliste

- 1: Lager
- 2: Lagerregalgasse
- 3: Lagerregalebene
- 4: Einlagerbahn
- 5: Regalbediengerät
- 6: Auslagerbahn
- 7: Lagerregalreihe
- 8: Auslagerlift
- 9: Pufferplatz
- 10: Platz
- 11: Stoppelement
- 12: Förderer
- 13: Einlagerlifte

- 100: System

- S: Sammelstrecke
- T: Transporteinheit
- V: Verteilstrecke

## Patentansprüche

1. Verfahren zum Bereitstellen von Transporteinheiten (T) aus einem Lager (1) in einer gewünschten vorgegebenen Reihenfolge auf mindestens einer Sammelstrecke (S), wobei
- die Transporteinheiten (T) in mehreren Lagerregalgassen (2) und Lagerregalebenen (3) gelagert werden;
- pro Lagerregalgasse (2) mindestens eine Einlagerbahn (4) vorgesehen wird;
- die Transporteinheiten (T) in bzw. aus dem Regal über ein Regalbediengerät (5) pro Lagerregalgasse (2) ein- und ausgelagert werden;
- pro Lagerregalgasse (2) eine als Auslagerpuffer dienende Auslagerbahn (6) vorgesehen wird;
wobei
- als Regalbediengerät ein Elnebenenregalbedlangerät (5) verwendet wird, das pro Lagerregalebene (3) und Lagerregalgasse (2) vorgesehen ist,
- pro Lagerregalgasse (2) ein dem Einebenenregalbediengerät (5) nachgeschalteter Auslagerlift (8) verwendet wird, um die Transporteinheiten (T) der jeweils pro Lagerregalgasse (2) nachgeschalteten Auslagerbahn (6) zu übergeben;
- die Auslagerbahnen (6) direkt mit der mindestens einen Sammelstrecke (S) verbunden sind;
und die Einebenenregalbediengeräte (5), Auslagerlifte (8) und die Auslagerbahnen (6) für einen feststehenden Auftrag mit benötigter Reihenfolge derart abgestimmt gesteuert und betrieben werden, dass die Transporteinheiten (T) von dem Austagerpuffer (6) auf die mindestens eine Sammelstrecke (S) in der gewünschten vorgegebenen Reihenfolge gelangen,
**dadurch gekennzeichnet, dass** die Einebenenregalbediengeräte (5) derart gesteuert und betrieben werden, dass über die Einebenenregalbediengeräte (5) eine Sortierung der Transporteinheiten (T) pro Lagerregalgassenebene (2, 3) stattfindet, dass die Auslagerlifte (8) derart gesteuert und betrieben werden, dass über die Auslagerlifte (8) eine Sortierung der Transporteinheiten (T) bezüglich der Lagerregalgassen (2) stattfindet, und dass die Austagerpuffer (6) über eine Fenstertechnik gesteuert werden, wobei die Auslagerpuffer (6) einer Sammelstrecke (S) derart aufeinander abgestimmt gesteuert und betrieben werden, dass die Abgabe der Transporteinheiten (T) die endgültige und gewünschte vorgegebene Reihenfolge auf der Sammelstrecke (S) ergibt und sobald die in der Reihenfolge einer Transporteinheit vorangehenden Transporteinheiten in den Auslagerpuffern vollständig sind, wird auf der Sammelstrecke für die jeweilige Transporteinheit ein ihrer Stelle in der Reihenfolge entsprechender Platz reserviert, auf den sie dann, sobald dieser Platz an dem jeweiligen Auslagerpuffer angelangt und vorbeibewegt, übergeben wird.

2. Verfahren nach einem der vorhergehenden Ansprüche, **dadurch gekennzeichnet, dass** die Auslagerpuffer (6) zur Übergabe der Transporteinheiten (T) an die mindestens eine Sammelstrecke (S) derart gesteuert und betrieben werden, dass über die Auslagerpuffer (6) eine Sortierung bezüglich der Lagerregalgassen (2) stattfindet.

3. Verfahren nach einem der vorhergehenden Ansprüche, **dadurch gekennzeichnet, dass** jedes Einebenenregalbediengerät (5) über eine spezifische FIFO-Tabelle gesteuert wird.

4. Verfahren nach einem der vorhergehenden Ansprüche, **dadurch gekennzeichnet, dass** jeder Auslagerlift (8) über eine spezifische FIFO-Tabelle gesteuert wird.

5. Verfahren nach einem der vorhergehenden Ansprüche, **dadurch gekennzeichnet, dass** die Einebenenregalbediengeräte (5) und Auslagerlifte (8) derart aufeinander abgestimmt gesteuert und betrieben werden, dass eine gewünschte Belegung der Auslagerpuffer (6) erfolgt.

6. Verfahren nach einem der vorhergehenden Ansprüche, **dadurch gekennzeichnet, dass** jede Lagerregalebene (3) mindestens einen Pufferplatz (9) zwischen Einebenenregalbediengerät (5) und Auslagerlift (8) aufweist.

7. Verfahren nach einem der vorhergehenden Ansprüche, **dadurch gekennzeichnet, dass** jeder Auslagerlift (8) ein oder mehrere, insbesondere zwei Plätze (10) aufweist.

8. Verfahren nach einem der vorhergehenden Ansprüche, **dadurch gekennzeichnet, dass** jeder Auslagerlift (8) an mehrere Auslagerpuffer (6) abgeben kann.

9. Verfahren nach einem der vorhergehenden Ansprüche, **dadurch gekennzeichnet, dass** mindestens so viele Auslagerpuffer (6) wie Lagerregalgassen (3) zu einer Gruppe zusammengefasst sind, die auf eine gemeinsame Sammelstrecke (S) münden.

10. Verfahren nach Anspruch 9, **dadurch gekennzeichnet, dass** mehrere Sammelstrecken (S) vorgesehen sind.

11. Verfahren nach einem der vorhergehenden Ansprüche, **dadurch gekennzeichnet, dass** die Puffer (6, 9) als Förderer ausgeführt sind.

12. Verfahren nach einem der vorhergehenden Ansprüche, **dadurch gekennzeichnet, dass** die Auslagerlifte (8) als Elnlagerlifte (13) verwendbar sind.

## Claims

1. Method of making transporting units (T) available from a storage facility (1) in a preset desired sequence on at least one collecting line (S),
- the transporting units (T) being stored along a plurality of storage racking aisles (2) on a plurality of levels (3) of the storage racking,
- at least one storage-entry feeding line (4) being provided for each storage racking aisle (2),
- the transporting units (T) being placed in and removed from the racking by means of one racking serving unit (5) for each storage racking aisle (2),
- a removal-from-storage feeding line (6) serving as a removal-from-storage buffer being provided for each storage racking aisle (2),
- what is used as a racking serving unit being a single-level racking serving unit (5) which is provided for each level (3) of the storage racking and for each storage racking aisle (2),
- in the case of each storage racking aisle (2), a removal-from-storage lift (8) positioned downstream of the single-level racking serving unit (5) being used to transfer the transporting units (T) to the removal-from-storage feeding line (6), which latter is positioned downstream in the case of each storage racking aisle (2),
- the removal-from-storage feeding lines (6) being directly connected to the at least one collecting line (S),
and, for a firm order for which there is a required sequence, the single-level racking serving units (5), the removal-from-storage lifts (8) and the removal-from-storage feeding lines (6) being so controlled and operated, in such a way as to be matched to one another, that the transporting units (T) make their way from the removal-from-storage buffer (6) onto the at least one collecting line (S) in the preset desired sequence,
**characterised in that** the single-level racking serving units (5) are so controlled and operated that sorting of the transporting units (T) on each level in the storage racking aisles (2, 3) takes place by means of the single-level racking serving units (5), **in that** the removal-from-storage lifts (8) are so controlled and operated that sorting of the transporting units (T) in relation to the storage racking aisles (2) takes place by means of the removal-from-storage lifts (8), and **in that** the removal-from-storage buffers (6) are controlled by means of a window technique, the removal-from-storage buffers (6) belonging to a collecting line (S) being so controlled and operated, in such a way as to be matched to one another, that the discharge of the transporting units (T) produces the final and preset desired sequence on the collecting line (S) and, as soon as all the transporting units which precede a transporting unit in the sequence are present on the removal-from-storage buffers, the given transporting unit has a place corresponding to its position in the sequence reserved for it on the collecting line, to which place it is then transferred as soon as this place reaches the given removal-from-storage buffer and is moved past it.

2. Method according to one of the preceding claims, **characterised in that**, to transfer the transporting units (T) to the at least one collecting line (S), the removal-from-storage buffers (6) are so controlled and operated that sorting in relation to the storage racking aisles (2) takes place by means of the removal-from-storage buffers (6).

3. Method according to one of the preceding claims, **characterised in that** each single-level racking serving unit (5) is controlled by means of a specific FIFO table.

4. Method according to one of the preceding claims, **characterised in that that** each removal-from-storage lift (8) is controlled by means of a specific FIFO table.

5. Method according to one of the preceding claims, **characterised in that** the single-level racking serving units (5) and the removal-from-storage lifts (8) are so controlled and operated, in such a way as to be matched to one another, that the removal-from-storage buffers (6) are occupied in a desired way.

6. Method according to one of the preceding claims, **characterised in that** each level (3) of the storage racking has at least one buffer location (9) between the single-level racking serving unit (5) and the removal-from-storage lift (8).

7. Method according to one of the preceding claims, **characterised in that** each removal-from-storage lift (8) has one or more, and in particular two, locations (10).

8. Method according to one of the preceding claims, **characterised in that** each removal-from-storage lift (8) is able to discharge onto a plurality of removal-from-storage buffers (6).

9. Method according to one of the preceding claims, **characterised in that** at least as many removal-from-storage buffers (6) as there are storage racking aisles (3), which removal-from-storage buffers (6) discharge onto one common collecting line (S), are combined into a group.

10. Method according to claim 9, **characterised in that** a plurality of collecting lines (S) are provided.

11. Method according to one of the preceding claims, **characterised in that** the buffers (6, 9) take the form of conveying means.

12. Method according to one of the preceding claims, **characterised in that** the removal-from-storage lifts (8) can be used as storage-entry lifts (12).

## Revendications

1. Procédé de préparation d'unités de transport (T) provenant d'un entrepôt (1) dans un ordre prescrit souhaité sur au moins une section de regroupement (S), selon lequel
- les unités de transport (T) sont stockées dans plusieurs travées de rayonnages d'entrepôt (2) et sur plusieurs plans de rayonnages d'entrepôt (3) ;
- pour chaque travée de rayonnages d'entrepôt (2) il est prévu au moins une voie de stockage (4) ;
- les unités de transport (T) sont respectivement stockées dans et déstockées du rayonnage par un gerbeur (5) pour chaque travée de rayonnages d'entrepôt (2) ;
- pour chaque travée de rayonnages d'entrepôt (2), il est prévu une voie de déstockage (6) servant de tampon de déstockage ;
selon lequel on utilise comme gerbeur un gerbeur monoplan (5) qui est prévu pour chaque plan de rayonnages d'entrepôt (3) et pour chaque travée de rayonnages d'entrepôt (2),
- pour chaque travée de rayonnages d'entrepôt (2), on utilise un élévateur de déstockage (8), situé en aval du gerbeur monoplan (5), pour transférer les unités de transport (T) vers la voie de déstockage (6) située en aval pour chaque travée de rayonnages d'entrepôt (2) ;
- les voies de déstockage (6) sont reliées directement à l'au moins une section de regroupement (S) ;
et les gerbeurs monoplan (5), les élévateurs de déstockage (8) et les voies de déstockage (6) sont commandés et actionnés de façon coordonnée pour une commande fixe dans un ordre nécessaire de telle sorte que les unités de transport (T) vont du tampon de déstockage (6) à l'au moins une section de regroupement (S) dans l'ordre prescrit souhaité,
**caractérisé en ce que** les gerbeurs monoplan (5) sont commandés et actionnés de telle sorte qu'un tri des unités de transport (T) est effectué pour chaque plan de travée de rayonnages d'entrepôt (2, 3) par le gerbeur monoplan (5), **en ce que** les élévateurs de déstockage (8) sont commandés et actionnés de telle sorte qu'un tri des unités de transport (T) est effectué par les élévateurs de déstockage (8) relativement aux travées de rayonnages d'entrepôt (2), et **en ce que** les tampons de déstockage (6) sont commandés par une technique de fenêtrage, les tampons de déstockage (6) d'une section de regroupement étant commandés et actionnés de façon coordonnée de telle sorte que la livraison des unités de transport (T) donne l'ordre prescrit souhaité et définitif sur la section de regroupement (S) et dès que les unités de transport précédant une unité de transport dans l'ordre sont entièrement dans les tampons de déstockage, on réserve sur la section de regroupement pour l'unité de transport correspondante un emplacement, correspondant à sa position dans l'ordre, où elle est transférée aussitôt que cet emplacement arrive au tampon de déstockage correspondant et passe devant celui-ci.

2. Procédé selon l'une des revendications précédentes, **caractérisé en ce que** les tampons de déstockage (6) sont commandés et actionnés pour transférer les unités de transport (T) vers au moins une section de regroupement (S) de telle sorte qu'un tri relativement aux travées de rayonnages d'entrepôt (2) est effectué par les tampons de déstockage (6).

3. Procédé selon l'une des revendications précédentes, **caractérisé en ce que** chaque gerbeur monoplan (5) est commandé par une table FIFO spécifique.

4. Procédé selon l'une des revendications précédentes, **caractérisé en ce que** chaque élévateur de déstockage (8) est commandé par une table FIFO spécifique.

5. Procédé selon l'une des revendications précédentes, **caractérisé en ce que** les gerbeurs monoplan (5) et les élévateurs de déstockage (8) sont commandés et actionnés de façon coordonnée l'un avec l'autre de telle sorte qu'une occupation souhaitée des tampons de déstockage (6) est effectuée.

6. Procédé selon l'une des revendications précédentes, **caractérisé en ce que** chaque plan de rayonnages d'entrepôt (3) comporte au moins un emplacement tampon (9) entre un gerbeur monoplan (5) et un élévateur de déstockage (8).

7. Procédé selon l'une des revendications précédentes, **caractérisé en ce que** chaque élévateur de déstockage (8) comporte un ou plusieurs, notamment deux, emplacements (10).

8. Procédé selon l'une des revendications précédentes, **caractérisé en ce que** chaque élévateur de déstockage (8) peut livrer plusieurs tampons de déstockage (6).

9. Procédé selon l'une des revendications précédentes, **caractérisé en ce que** au moins autant de tampons de déstockage (6) que de travées de rayonnages d'entrepôt (3) sont rassemblés en un groupe qui débouche sur une section de regroupement (S) commune.

10. Procédé selon la revendication 9, **caractérisé en ce qu'**il est prévu plusieurs sections de regroupement (S).

11. Procédé selon l'une des revendications précédentes, **caractérisé en ce que** les tampons (6, 9) sont réalisés sous la forme de transporteurs.

12. Procédé selon l'une des revendications précédentes, **caractérisé en ce que** les élévateurs de déstockage (8) peuvent être utilisés comme élévateurs de stockage (13).
